# EUROPÄISCHE PATENTSCHRIFT

(11) **EP 2 149 771 B1**
(45) Veröffentlichungstag und Bekanntmachung des Hinweises auf die Patenterteilung: **14.12.2016**
(21) Anmeldenummer: 09166272.6
(22) Anmeldetag: 23.07.2009
(51) Int. Cl.: F28F 3/12, B60H 1/00

(54) **Vorrichtung zur Kühlung einer Wärmequelle eines Kraftfahrzeugs**
Device for cooling a heat source of a motor vehicle
Dispositif destiné au refroidissement d'une source de chaleur d'un véhicule automobile

(30) Priorität: 29.07.2008 DE 102008035400; 23.09.2008 DE 102008048577
(43) Veröffentlichungstag der Anmeldung: 03.02.2010
(73) Patentinhaber: MAHLE Behr GmbH & Co. KG, 70469 Stuttgart (DE)
(72) Erfinder: Neff, Heiko, 71549 Auenwald (DE); Isermeyer, Tobias, 74245 Löwenstein (DE); Schmid, Caroline, 70186 Stuttgart (DE); Mohamed-Ali, Jalal, 71034 Böblingen (DE); Heckenberger, Thomas, 5837 Fentange (LU); Herrmann, Hans-Georg, 66132 Saarbrücken (DE); Wiebelt, Achim, 67435 Neustadt (DE); Hirsch, Stefan, 70180 Stuttgart (DE)
(74) Vertreter: Grauel, Andreas

(56) Entgegenhaltungen:
- EP-A- 0 964 460
- EP-A- 1 391 955
- EP-A- 1 906 126
- WO-A-03/031884
- DE-C1- 4 408 960
- US-A1- 2004 182 560

## Beschreibung

Die vorliegende Erfindung bezieht sich auf eine Vorrichtung zur Kühlung einer Wärmequelle eines Kraftfahrzeugs und auf einen Kältemittelkreislauf für ein Kraftfahrzeug.

In modernen Hybridelektro- oder Elektrofahrzeugen (HEV/EV Fahrzeugen) werden leistungsfähige Energiespeicher, wie zum Beispiel Li-Ionen oder NiMH-Akkumulatoren oder Super-Caps eingesetzt. Bei diesen Energiespeichern kommt es beim schnellen Laden und Entladen aufgrund von Widerständen in und außerhalb der Zellen zur Erwärmung. Temperaturen über 50°C schädigen die Energiespeicher dauerhaft. Um die Funktion der Energiespeicher zu gewährleisten, müssen diese aktiv gekühlt werden. Dazu werden die Energiespeicher mit einer mit Kältemittel durchströmten Platte in thermischen Kontakt gebracht und somit gekühlt. Die Batteriekühlplatte wird als zusätzlicher, zweiter Verdampfer in den bestehenden Klimakältekreis im Fahrzeug eingebunden (Zwei-Verdampfer-Anlage).

Bei der Kühlung der Zellen ist es wichtig, dass alle Zellen gleichmäßig gekühlt werden. So ist ein maximaler Temperaturgradient in der Kühlplatte von ca. 5K einzuhalten. Bei ungleichmäßiger Kühlung der Zellen altern die Zellen unterschiedlich schnell, was die Funktion und Leistung der Energiespeicher negativ beeinflusst.

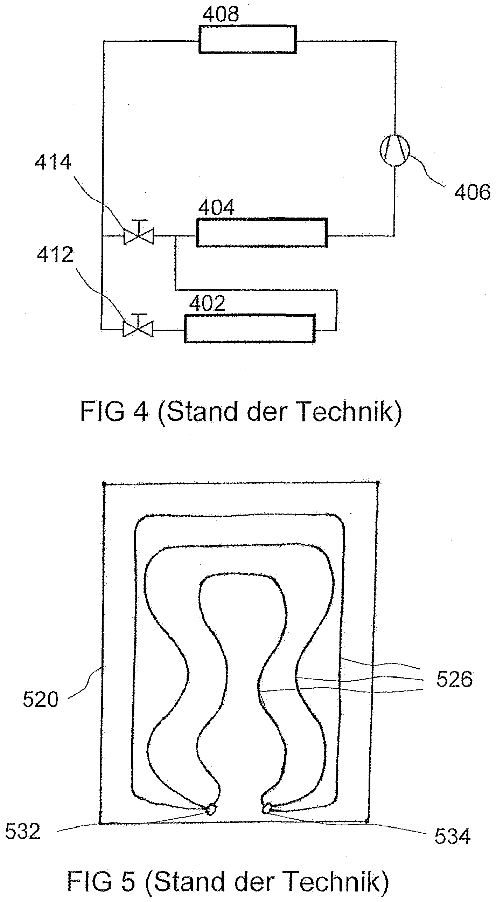

Fig. 4 zeigt einen Kältemittelkreislauf gemäß dem Stand der Technik, bei dem eine Batteriekühlplatte 402 in Reihe mit einem Klimaverdampfer 404 geschaltet ist. Neben der Batteriekühlplatte 402 und dem Klimaverdampfer 404 weist der Kältemittelkreislauf einen Verdichter 406, einen Kondensator 408, ein Ventil 412 mit fester Öffnung (FXV) und ein thermisches Expansionsventil (TXV) 414 auf.

Die Kühlplatte 402 zur Kühlung der Energiespeicher wird immer "nass" gefahren, um die gleichmäßige Kühlung aller Zellen der Energiespeicher sicherzustellen. Das bedeutet, dass der Batteriekühlplatte 402 immer so viel Kältemittel zur Verfügung gestellt werden muss, dass sich die physikalischen Prozesse in der Batteriekühlplatte 402 immer im Nassdampfgebiet abspielen. Um eine gleichmäßige Temperaturverteilung auf der Platte 402 zu gewährleisten, darf es in der Platte 402 nie zur Überhitzung kommen.

Übertragen auf den Kältekreis im Fahrzeug bedeutet dies, dass es nicht möglich ist, den Ausgang der Batteriekühlplatte 402, analog zur Verschaltung des Klimaverdampfers 404, direkt vor dem Verdichter 406 einzubringen. Denn im Austritt der Platte 402 ist immer noch flüssiges Kältemittel vorhanden, so dass der Verdichter 406 Flüssigkeitsschlägen ausgesetzt sein kann und beschädigt werden würde.

Deshalb wird die Batteriekühlplatte 402 in Reihe zum Hauptklimaverdampfer 404 geschaltet. Der noch vorhandene flüssige Anteil des Kältemittels wird im Hauptklimaverdampfer 404 nachverdampft, so dass Flüssigkeitsschläge am Verdichter 406 verhindert werden. Der Massenstrom durch die Batteriekühlplatte 404 wird durch das Ventil 412 mit fester Öffnung bestimmt. Der feste Öffnungsdurchmesser des Ventils 412 wird durch den größten Lastfall in der Batterie bestimmt.

Fig. 5 zeigt eine Batteriekühlplatte 520 nach dem Stand der Technik. Die Batteriekühlplatte 520 weist eine Mehrzahl von Kältemittelfluten 526 auf. Die Kältemittelfluten 526 weisen einen gemeinsamen Eintritt 532 und einen gemeinsamen Austritt 534 auf.

Die Betriebspunkte für die Batteriekühlplatte 520 werden im Kreislauf so eingestellt, dass sich der Operationspunkt der Platte 520 immer im Nassdampfgebiet befindet und somit das Kältemittel in der Platte 520 nahezu dieselbe Temperatur aufweist. Bei der Gestaltung der Strömungsfluten in der Platte 520 muss also vor allem beachtet werden, dass das Kältemittel gleichmäßig in die Fluten 526 verteilt wird, der Druckverlust in der Platte 520 nicht zu hoch wird und dass genügend Fluten 526 zur gleichmäßigen Kühlung der Platte 520 vorhanden sind. Um eine Gleichverteilung des Kältemittels zu gewährleisten bietet es sich an, das Kältemittel in einem Punkt 532 in der Platte 520 eintreten zu lassen, so dass es sich in die einzelnen Fluten 526 in der Platte 520 verteilen kann. Die Fluten 526 treffen sich wieder in dem Austrittspunkt 534. Räumlich sind Vor- und Rückströmung relativ weit voneinander entfernt.

Die in Fig. 4 gezeigte Verschaltung der Batteriekühlplatte im Kältekreis des Fahrzeuges hat den Nachteil, dass die Batteriekühlung immer mit der Klimatisierung der Fahrzeugkabine gekoppelt ist. Es ist nicht möglich, die Batteriekühlplatte alleine, ohne den Klimaverdampfer, zu betreiben. Dies hat vor allem im Winter enorme Nachteile, denn der Klimaverdampfer wird nur bis zu bestimmten Außentemperaturen betrieben, um Vereisung zu verhindern. Konkret bedeutet dies, dass bei kalten Außentemperaturen kein Betrieb der Batterie mehr möglich ist.

Die US 2004/182560 A1 offenbart eine Vorrichtung zur Erzeugung von Kanälen in Wärmetauschervorrichtungen. Dabei sind mehrere Vorströmungsfluten und mehrere Rückströmungsfluten vorgesehen, wobei eine Mehrzahl von Vorströmungsfluten und Rückströmungsfluten abwechselnd nebeneinanderliegend angeordnet sind.

Die US 2004/182560 A1 zeigt damit eine Vorrichtung mit den Merkmalen des Oberbegriffs von Anspruch 1.

Es ist die Aufgabe der vorliegenden Erfindung, eine verbesserte Vorrichtung zur Kühlung einer Wärmequelle eines Kraftfahrzeugs und einen verbesserten Kältemittelkreislauf für ein Kraftfahrzeug zu schaffen.

Diese Aufgabe wird durch eine Vorrichtung gemäß Anspruch 1 sowie einen Kältemittelkreislauf gemäß Anspruch 11 gelöst.

Der vorliegenden Erfindung liegt die Erkenntnis zugrunde, dass eine Kältemittelplatte direkt vor einem Verdichter betrieben werden kann, wenn das Kältemittel im Austritt aus der Kältemittelplatte gasförmig ist. Um eine gleichmäßige Temperaturverteilung auf der Kältemittelplatte zu realisieren, werden die Kältemittelfluten in der Kältemittelplatte erfindungsgemäß so angeordnet, das Vor- und Rückströmungen direkt nebeneinander liegen.

Vorteilhafterweise kann die Verschaltung der erfindungsgemäßen Batteriekühlplatte im Kältekreis so realisiert werden, dass die Batteriekühlung auch ohne Klimaverdampfer betrieben werden kann. Die Gestaltung der Batteriekühlplatte ist dabei für die sich aus der neuen Verschaltung ergebenden Herausforderungen für eine gleichmäßige Zellkühlung ausgelegt.

Die vorliegende Erfindung schafft eine Vorrichtung zur Kühlung einer Wärmequelle eines Kraftfahrzeugs, mit einem Kühlkörper, der mehrere Vorströmungsfluten und mehrere Rückströmungsfluten aufweist, wobei zumindest eine Mehrzahl der Vorströmungsfluten und Rückströmungsfluten abwechselnd nebeneinanderliegend in dem Kühlkörper angeordnet sind, wobei eine Vorströmungsflut in eine erste Teilflut und mindestens eine zweite Teilflut aufgeteilt wird und die erste Teilflut der Vorströmungsflut unmittelbar benachbart zur der zweiten Teilflut der Vorströmungsflut korrespondierenden Rückströmungsflut angeordnet ist und die zweite Teilflut der Vorströmungsflut unmittelbar benachbart zur der ersten Teilflut der Vorströmungsflut korrespondierenden Rückströmungsflut angeordnet ist, dadurch gekennzeichnet, dass die zu der ersten Teilflut der Vorströmungsflut korrespondierende Rückströmungsflut und die zu der zweiten Teilflut der Vorströmungsflut korrespondierende Rückströmungsflut als getrennte Fluten ausgebildet sind. Durch die abwechselnde Anordnung der Vorströmungsfluten und Rückströmungsfluten kann eine möglichst gleichmäßige Temperaturverteilung innerhalb des Kühlkörpers erreicht werden. Somit kann ein vorbestimmter maximaler Temperaturgradient auf dem Kühlkörper eingehalten werden.

Beispielsweise können die Vorströmungsfluten und die Rückströmungsfluten so in dem Kühlkörper angeordnet sein, dass zwischen benachbarten Vorströmungsfluten mindestens eine Rückströmungsflut angeordnet ist. Auch können die Vorströmungsfluten und die Rückströmungsfluten so in dem Kühlkörper angeordnet sein, dass zwischen benachbarten Rückströmungsfluten mindestens eine Vorströmungsflut angeordnet ist. Somit kann gewährleistet werden, dass ein Temperaturunterschied zwischen Vorströmungsfluten und Rückströmungsfluten ausgeglichen wird.

Der Kühlkörper kann eine Eintrittsöffnung aufweisen, die mit den Vorströmungsfluten verbunden ist und eine oder eine Mehrzahl von Austrittsöffnungen aufweisen, die jeweils mit einer der Rückströmungsfluten verbunden sind. Somit kann ein Überkreuzen von Vorströmungsfluten oder Rückströmungsfluten vermieden werden.

Der Kühlkörper kann eine Mehrzahl von Verbindungsstellen aufweisen, die ausgebildet sind, um jeweils eine der Vorströmungsfluten mit jeweils einer der Rückströmungsfluten zu verbinden. Dabei können die Mehrzahl der Verbindungsstellen in einer ersten Hälfte des Kühlkörpers und die Eintrittsöffnung und die eine oder Mehrzahl der Austrittsöffnungen in einer zweiten Seite des Kühlkörpers angeordnet sein, wobei die erste und die zweite Hälfte einander gegenüberliegen. Somit können die Vorströmungsfluten und die Rückströmungsfluten über eine möglichst große Strecke nebeneinander geführt werden.

Gemäß einer besonders bevorzugten Ausführungsform umfasst der Kühlkörper mehrere geschichtete Platten, wobei zwischen den Platten Fluten gebildet werden und ein Fluid von einer Eintrittsöffnung durch die Fluten zu einer Austrittsöffnung führbar ist. Durch die Stapelung der Platten ist es möglich, die Fluten in verschiedenen Ebenen anzuordnen. Die Fluten können sich in den verschiedenen Ebenen überschneiden und zu einem Austrittspunkt und zu einer Austrittsöffnung zusammengeführt werden. Auf komplexe Anschlussblöcke kann somit verzichtet werden.

Vorteilhafterweise kann die Vorrichtung ausgebildet sein, um ein Fluid, insbesondere ein Kältemittel, in zumindest teilweise flüssiger Form aufzunehmen und das Fluid, insbesondere ein Kältemittel in gasförmiger Form abzugeben. Somit kann der Vorrichtung ein Verdichter nachgeschaltet werden, ohne dass die Gefahr besteht, dass der Verdichter durch Flüssigkeitsschläge beschädigt wird. Dazu können die Rückströmungsfluten zumindest im Bereich der Austrittsöffnungen jeweils eine Überhitzungszone aufweisen.

Die erfindungsgemäße Vorrichtung kann einen Anschlussblock aufweisen, der eine Zuführöffnung und eine Abführöffnung aufweist und ausgebildet ist, um die Eintrittsöffnung des Kühlkörpers mit der Zuführöffnung und die eine oder Mehrzahl von Austrittsöffnungen des Kühlkörpers mit der Abführöffnung zu verbinden. Der Anschlussblock ermöglicht eine abgestimmte Anbindung des Kühlkörpers an einen Kältemittelkreis. Insbesondere kann der Anschlussblock ausgebildet sein, um das Fluid, insbesondere das Kältemittel, gleichmäßig auf die mehreren Vorströmungsfluten zu verteilen.

Die vorliegende Erfindung schafft ferner einen Kältemittelkreislauf für ein Kraftfahrzeug, mit einer erfindungsgemäßen Vorrichtung zur Kühlung einer Wärmequelle eines Kraftfahrzeugs und einem Verdichter, der der Vorrichtung zur Kühlung nachgeschaltet ist. Vorteilhafterweise kann der Kältemittelkreislauf auch ohne einen zusätzlichen Klimaverdampfer betrieben werden.

Gemäß einer Ausgestaltung weist der Kältemittelkreislauf einen Klimaverdampfer auf, der parallel zu der Vorrichtung zur Kühlung geschaltet ist. Durch die Parallelschaltung können die Vorrichtung zur Kühlung und der Klimaverdampfer unabhängig voneinander betrieben werden.

Gemäß einer Ausgestaltung kann der Kältemittelkreislauf ein geregeltes Expansionsventil zur Regelung eines Kältemittelstroms durch den Kühlkörper aufweisen. Beispielsweise kann ein thermisches Expansionsventil eingesetzt werden. Das geregelte Expansionsventil kann ausgebildet sein, um den Kältemittelstrom abhängig von einer Temperatur des Fluids, insbesondere des Kältemittels, nach Durchströmen des Kühlkörpers zu regeln. Somit kann gewährleistet werden, dass das Fluid, insbesondere das Kältemittel, im Austritt gasförmig ist. Die Regelung ermöglicht auch eine getaktete Kühlung der Wärmequelle.

Gemäß einer weiteren Ausgestaltung kann das Expansionsventil eine Baueinheit mit dem Kühlkörper bilden. Somit kann die Anzahl der Teile des Kältemittelkreislaufes reduziert und die Montage erleichtert werden.

Bevorzugte Ausführungsbeispiele der vorliegenden Erfindung werden nachfolgend bezugnehmend auf die beiliegenden Zeichnungen näher erläutert. Es zeigen:
- Fig. 1: eine Darstellung eines erfindungsgemäßen Kältemittelkreises;
- Fig. 2: eine Darstellung einer erfindungsgemäßen Vorrichtung zur Kühlung;
- Fig. 3a - 3c: Darstellungen eines Anschlussblocks für die erfindungsgemäße Vorrichtung zur Kühlung;
- Fig. 4: eine Darstellung eines Kältemittelkreises gemäß dem Stand der Technik;
- Fig. 5: eine Darstellung einer Kühlplatte gemäß dem Stand der Technik;
- Fig. 6a - 6f: eine Darstellung einer erfindungsgemäßen Vorrichtung zur Kühlung;
- Fig. 7a: Darstellung eines Anschlussblockes für die erfindungsgemäße Vorrichtung zur Kühlung;
- Fig. 7b: Darstellung einer Anbindung eines Anschlussrohres an eine erfindungsgemäße Vorrichtung zur Kühlung;
- Fig. 8a, 8c, 8e: verschiedene Darstellungen einer nicht erfindungsgemäßen Vorrichtung zur Kühlung; und
- Fig. 8b, 8d: verschiedene Darstellungen einer erfindungsgemäßen Vorrichtung zur Kühlung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

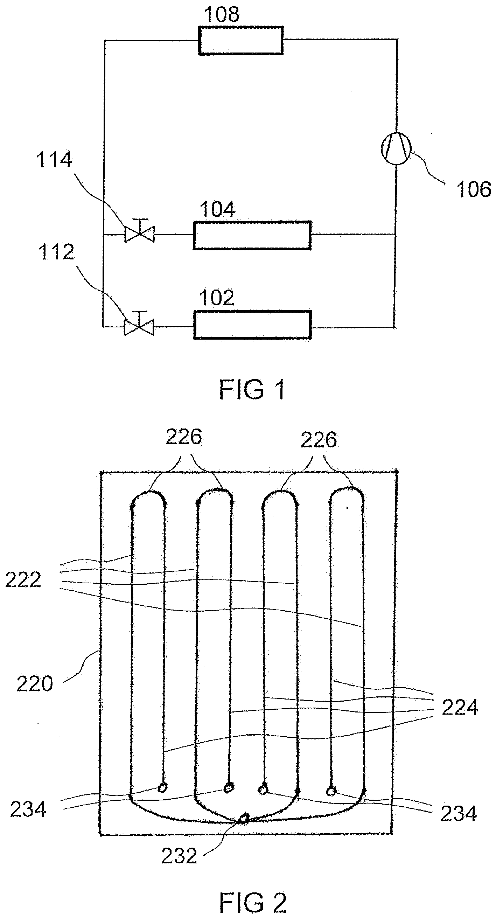

Fig. 1 zeigt einen Kältemittelkreislauf gemäß einem Ausführungsbeispiel der vorliegenden Erfindung. Der Kältemittelkreislauf kann beispielsweise in einem Kraftfahrzeug zur Kühlung einer Wärmequelle eingesetzt werden. Bei der Wärmequelle kann es sich um einen leistungsfähigen Energiespeicher, wie zum Beispiel Li-Ionen oder NiMH-Akkumulatoren oder Super-Caps handeln. Der Kältemittelkreislauf weist eine Vorrichtung zur Kühlung der Wärmequelle auf, die gemäß diesem Ausführungsbeispiel als Batteriekühlplatte 102 ausgebildet ist. Die Batteriekühlplatte 102 ist parallel zu einem Klimaverdampfer 104 geschaltet. Neben der Batteriekühlplatte 102 und dem Klimaverdampfer 104 weist der Kältemittelkreislauf einen Verdichter 106, einen Kondensator 108, ein erstes geregeltes Expansionsventil (TXV) 112 und ein zweites geregeltes Expansionsventil (TXV) 114 auf.

Der Kältemittelkreislauf kann von einem Kältemittel durchflossen werden. Das erste Expansionsventil 112 ist in Flussrichtung vor der Batteriekühlplatte 102 angeordnet und ausgebildet, um einen Durchfluss des Kältemittels durch die Batteriekühlplatte 102 zu regeln. Beispielsweise kann das Expansionsventil 112 ausgebildet sein, um den Durchfluss des Kältemittels abhängig von einer Temperatur des Kältemittels ausgangsseitig der Batteriekühlplatte 102 zu regeln. Die Temperatur des Kältemittels kann dazu von einem Temperaturfühler erfasst und an eine Steuerung des Expansionsventils 112 bereitgestellt werden. Das zweite Expansionsventil 114 ist in Flussrichtung vordem Klimaverdampfer 104 angeordnet und ist ausgebildet, um einen Durchfluss des Kältemittels durch den Klimaverdampfer 104 zu regeln. Der Verdichter 106 ist im Strömungspfad des Kältemittels hinter der Batteriekühlplatte 102 und dem Klimaverdampfer 104 angeordnet. Ausgangsseitig ist der Verdichter 106 mit dem Kondensator 108 verbunden. Der Kondensator 108 ist ausgangsseitig über die Ventile 112, 114 mit der Batteriekühlplatte 102 und dem Klimaverdampfer 104 verbunden.

Der Klimaverdampfer 104 ist zum Betrieb des Kühlkreises nicht erforderlich. Um eine autarke Funktion der Batteriekühlung 102 zu gewährleisten, darf die Batteriekühlung 102 nicht mehr an die Funktion des Klimaverdampfers 104 gekoppelt sein. Dazu wird die Batteriekühlplatte 102 parallel zum Klimaverdampfer 104 geschaltet, wie es in Fig. 1 gezeigt ist. Die Regelung des Massenstroms durch die Batteriekühlplatte 102 erfolgt nun nicht mehr durch ein Ventil mit fester Öffnung (FXV), sondern durch ein Expansionsventil 112, welches den Massenstrom durch die Batteriekühlplatte 102 nach Überhitzung hinter der Batteriekühlplatte regelt. Eine solche Regelung kann analog zur Regelung des Klimaverdampfers 104 sein.

Bei der erfindungsgemäßen Verschaltung treten lokal definierte Überhitzungszonen (überhitzter Dampf) im Austrittsbereich der Fluten in der Batteriekühlplatte 102 auf (physikalischer Effekt). Die Überhitzungen liegen üblicherweise im Bereich von 1-10 K. Auf der Platte 102 wirkt sich der Temperaturgradient im Kältemittel aufgrund der Überhitzungszone direkt auf die Plattentemperatur aus, da in der Regel die Batteriekühlplatte 102 aus einem sehr gut wärmeleitenden Material, wie zum Beispiel Aluminium hergestellt wird. Das bedeutet, es gibt "kalte" und "warme" Zonen auf der Plattenoberfläche. Beim Design der Batteriekühlplatten 102 nach dem Stand der Technik, wie in Fig. 5 gezeigt, kann der geforderte Temperaturgradient auf der Platte von 5 K nicht mehr eingehalten werden. Die in Fig. 5 gezeigte Platte 520 hat drei Fluten 525 und einen Ein- und Austrittsbereich 532, 534. Die Vor- und Rückströmung sind nicht unmittelbar nebeneinander angeordnet, so dass ein Temperaturausgleich auf der Platte 520 im benötigten Maße nicht stattfinden kann.

Deshalb wird bei der in Fig. 1 gezeigten erfindungsgemäßen Verschaltung der Batteriekühlplatte 102 im Kältekreislauf das Design der Kühlplatte 102 bzw. die Flutenführung an die Überhitzungszonen so angepasst, dass eine gleichmäßige Temperaturverteilung auf der Platte 102 und somit eine gleichmäßige Kühlung der Zellen, trotz Überhitzung in der Platte 102, gewährleistet werden kann.

Fig. 2 zeigt eine Darstellung einer Vorrichtung zur Kühlung einer Wärmequelle gemäß einem Ausführungsbeispiel der vorliegenden Erfindung. Gemäß diesem Ausführungsbeispiel ist die Vorrichtung zur Kühlung als Batteriekühlplatte für eine Überhitzungsregelung ausgebildet. Die Batteriekühlplatte weist einen Kühlkörper 220 auf, in dem mehrere Vorströmungsfluten 222 und mehrere Rückströmungsfiuten 224 angeordnet sind. Die Vorströmungsfluten 222 und Rückströmungsfluten 224 können als Kanäle innerhalb des Kühlkörpers 220 ausgebildet sein, durch die ein zur Kühlung geeignetes Kältemittel strömen kann. Die Vorströmungsfluten 222 sind über Verbindungsstellen 226 jeweils mit einer zugeordneten Rückströmungsflut 224 verbunden. Der Kühlkörper 220 weist eine Eintrittsöffnung 232 und eine Mehrzahl von Austrittsöffnungen 234 auf. Das Kältemittel kann über die Eintrittsöffnung 232 in den Kühlkörper 220 hinein und über die Mehrzahl der Austrittsöffnungen 234 aus dem Kühlkörper 220 hinaus strömen. Insbesondere kann das Kältemittel über die Eintrittsöffnung 232 in die Vorströmungsfluten 222, über die Verbindungsstellen 226 in die Rückströmungsfluten 224 und aus den Austrittsöffnungen 234 aus den Rückströmungsfluten 234 heraus strömen. Gemäß diesem Ausführungsbeispiel sind die Verbindungsstellen 226 an einem Rand des Kühlkörpers 220 und die Ein- und Austrittsöffnungen 232, 234 an einem gegenüberliegenden Rand des Kühlkörpers 220 angeordnet. Die Vorströmungsfluten 222 und die Rückströmungsfluten 224 sind im Kühlkörper 220 parallel zueinander geführt. Die Vorströmungsfluten 222 und die Rückströmungsfluten 224 sind dabei jeweils abwechselnd angeordnet, so dass neben einer Vorströmungsflut 222 jeweils eine Rückströmungsflut 224 angeordnet ist, und umgekehrt. Im mittleren Bereich des Kühlkörpers 220 sind gemäß diesem Ausführungsbeispiel zwei Rückströmungsfluten 224 nebeneinanderliegend angeordnet.

Das Temperaturniveau des Kältemittels in den Fluten 222, 224 der Batteriekühlplatte 220 vor der Überhitzungszone ist aufgrund der Verdampfung des Kältemittels nahezu konstant und auf jeden Fall niedriger als das Temperaturniveau in der Überhitzungszone. Die Verschiebung des Dampfdruckes im Kältemittel durch den Druckverlust in den Fluten 222, 224 ist bei optimaler Kanalauslegung zu vernachlässigen. Um eine Gleichverteilung der Temperatur auf der Plattenoberfläche zu realisieren, ist es deshalb notwendig, die Fluten 222, 224 mit "kalten" Verdampfungszonen direkt neben "warmen" Überhitzungszonen anzuordnen, also Vor- und Rückströmung direkt nebeneinander. Die Temperaturgradienten in der Platte 220 gleichen sich aus und die Temperatur auf der Plattenoberfläche egalisiert sich. Eine mögliche Flutengestaltung ist in Fig. 2 gezeigt. Hier sind Vor- und Rückströmung 222, 224 unmittelbar nebeneinander angeordnet.

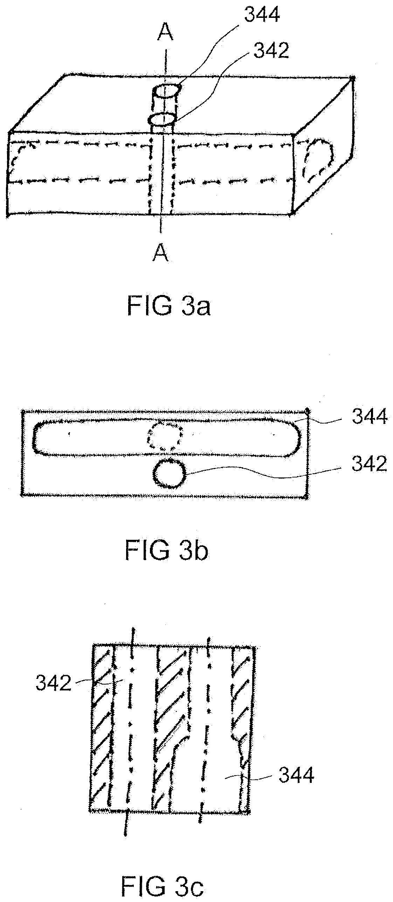

Eine solche Gestaltung der Stromführung in der Platte 220 führt einen komplexen Anschlussblock mit sich (gezeigt in den Fig. 3a - 3c). Der Eintritt in die Platte 220 erfolgt gemäß dem in Fig. 2 gezeigten Ausführungsbeispiel in einem Punkt 232.

Der Punkt 232 sollte möglichst symmetrisch zur Flutenführung 222 angeordnet sein, um eine optimale, gleichmäßige Aufteilung des am Eintritt der Platte 220 zweiphasigen Kältemittels (Dampf und Flüssigkeit) in die einzelnen Fluten 222 in der Platte 220 zu gewährleisten. Ist eine symmetrische Anordnung aus Bauraumgründen nicht möglich, so sind die Fluten 222, 224 in der Platte 220 in ihrem Querschnitt entsprechend anzupassen. Eine gleichmäßige Aufteilung des Kältemittels ist sehr wichtig für eine gleichmäßige, homogene Temperaturverteilung. Ist keine gleichmäßige Verteilung des Kältemittels gegeben, kann dies in ungewünschten, undefinierten Überhitzungszonen resultieren.

Der Austritt des Kältemittels kann bei diesem Plattendesign nun nicht mehr in einem Punkt zusammengefasst werden, ohne dass sich Fluten 224 überschneiden würden. Deshalb weist die Platte 220 mehrere Austrittspunkte 224 des Kältemittels auf, die sich erst im Anschlussblock wieder vereinen.

Ein weiterer Vorteil der erfindungsgemäßen Flutenanordnung zeigt sich, wenn die Kühlung der Platte 220 nicht kontinuierlich erfolgt, sondern die Kühlung im ON/OFF-Betrieb betrieben wird (Taktung). Das Prinzip der Taktung sieht vor, die Batterie so lange nicht zu kühlen bis die Zellen eine bestimmte kritische Temperatur erreicht haben. Haben die Zellen die kritische Temperatur erreicht, wird die Kühlung angeschaltet und die Zellen werden gekühlt, und zwar so lange, bis eine minimale Temperatur erreicht wird. In der Regel liegt der optimale Temperaturbereich für die Zelle zwischen 30°C und 40°C. Die getaktete Einspritzung des Kältemittels ermöglicht es, die Zellen immer in diesem optimalen Temperaturbereich zu halten.

Wird Kältemittel in die "aufgeheizte" Platte 220 eingespritzt, so fängt das Kältemittel zuerst im Eintrittsbereich an zu verdampfen und zu überhitzen. Die Überhitzungsfront schiebt sich immer weiter Richtung Plattenaustritt 234, bis ein stationärer Zustand erreicht wird. Bis der stationäre Zustand erreicht wird, ist der Temperaturgradient im Kältemittel oftmals größer als 10 K. Die Stromführung in der Platte 220 mit Vor- und Rückströmung 222, 224 direkt nebeneinander ermöglicht es, diese hohen Temperaturgradienten auszugleichen und abzumildern. Somit ist ein autarker Betrieb der Batteriekühlung möglich und das Flutendesign gleicht Temperaturgradienten aus Überhitzungsregelung und/oder getakteter Einspritzung des Kältemittels in der Plattenoberfläche aus. Die erfindungsgemäße Batteriekühlplatte ist für Überhitzungsregelung und Taktung geeignet.

Die Figuren 3a - 3c zeigen unterschiedliche Darstellungen eines Anschlussblockes gemäß einem Ausführungsbeispiel der vorliegenden Erfindung. Der Anschlussblock ist geeignet, um den in Fig. 2 gezeigten Kühlkörper an den in Fig. 1 gezeigten Kältemittelkreislauf abzuschließen. Insbesondere ist der Anschlussblock ausgebildet, um das einströmende Kältemittel gleichmäßig auf die mehreren Vorströmungsfluten des Kühlkörpers zu verteilen.

Fig. 3a zeigt eine Ansicht des Anschlussblockes mit einer Zuführöffnung 342 und einer Abführöffnung 344. Gemäß diesem Ausführungsbeispiel ist der Anschlussblock quaderförmig ausgebildet und die Zuführöffnung 342 und die Abführöffnung 344 sind nebeneinander auf einer Oberfläche des Anschlussblocks angeordnet. Die Zuführöffnung 342 bildet einen Eintritt und die Abführöffnung 344 bildet einen Austritt für das durch den Kühlkörper strömende Kältemittel. Dazu weist der Anschlussblock Kanäle auf, die ausgebildet sind, um die Zuführöffnung 342 mit der Eintrittsöffnung des Kühlkörpers und die Abführöffnung 344 mit den Austrittsöffnungen des Kühlkörpers zu verbinden. Dazu führen gemäß diesem Ausführungsbeispiel von der Zuführöffnung 342 und der Abführöffnung 344 jeweils Kanäle senkrecht in den Anschlussblock hinein. Der mit der Abführöffnung 344 verbundene Kanal ist mit einem weiteren horizontalen Kanal innerhalb des Anschlussblocks verbunden, um eine Verbindung zu der Mehrzahl der Austrittsöffnungen des Kühlkörpers herzustellen.

Fig. 3b zeigt eine Draufsicht auf den in Fig. 3a gezeigten Anschlussblock.

Fig. 3c zeigt einen Querschnitt durch den Anschlussblock entlang der in Fig. 3a gezeigten Schnittlinie A-A. Die Abführöffnung 344 weist in einem dem Kühlkörper zugewandten Bereich eine Ausdehnung des Durchmessers auf.

Die erfindungsgemäße Vorrichtung zur Kühlung kann zur Kühlung anderer als der beschriebenen Wärmequellen eingesetzt werden. Der Kühlkörper kann in seiner Form an die Wärmequellen angepasst sein. Insbesondere kann eine Oberfläche des Kühlkörpers einer zu kontaktierenden Oberfläche der Wärmequelle nachgebildet sein. Abhängig von der Form des Kühlkörpers kann die Anordnung der Fluten angepasst werden. Dabei wird vorzugsweise eine abwechselnde Anordnung der Vorströmungsfluten und Rückströmungsfluten beibehalten. Die Fluten können in einzelne Gruppen zusammengefasst sein. Insbesondere im Übergangsbereich zwischen zwei Gruppen kann es zu einer Abweichung der abwechselnden Anordnung kommen, so dass vereinzelt zwei Vorströmungsfluten oder zwei Rückströmungsfluten nebeneinander angeordnet sein können. Abhängig von den Gegebenheiten kann auch eine abwechselnde Anordnung von beispielsweise jeweils zwei Vorströmungsfluten und jeweils zwei Rückströmungsfluten möglich sein. Solche Variationen in der abwechselnden Anordnung sind erfindungsgemäß möglich, solange die gewählte abwechselnde Anordnung einen Ausgleich des Temperaturunterschieds zwischen Verdampfungszonen und Überhitzungszonen ermöglicht. Die Eintritts- und Austrittsöffnungen können an anderen Stellen des Kühlkörpers angeordnet werden und in ihrer Anzahl variiert werden. So können mehr als eine Eintrittsöffnung vorgesehen werden oder einzelne Rückströmungsfluten eine gemeinsame Austrittsöffnung aufweisen.

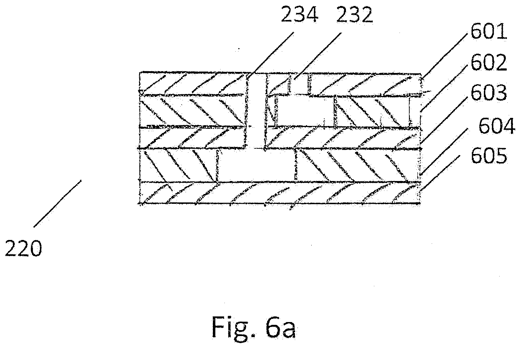

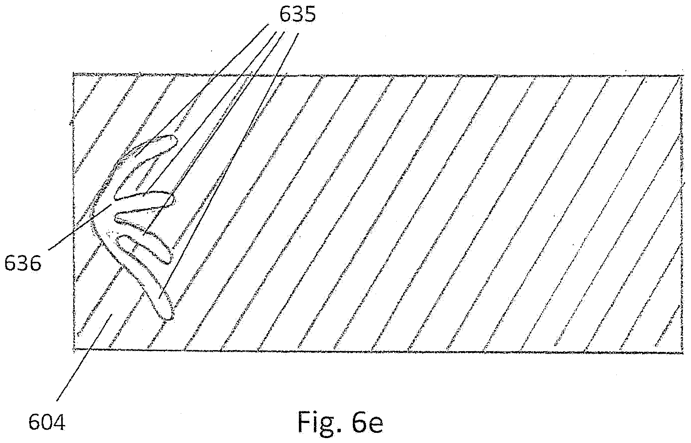

Die Fig. 6a bis 6f zeigen ein weiteres Ausführungsbeispiel einer erfindungsgemäßen Vorrichtung zur Kühlung einer Wärmequelle eines Kraftfahrzeugs. Gemäß Fig. 6e umfasst der Kühlkörper 220 mehrere Platten, namentlich eine Deckplatte 601, eine Kanalplatte 602, eine Zwischenplatte 603, eine Durchlassplatte 604 und eine Bodenplatte 605, die übereinander geschichtet und vorzugsweise verlötet sind und somit den Kühlkörper 220 bilden.

Die Platten, die später noch näher beschrieben werden sollen, weisen unter-schiedliche Aussparungen auf, so dass ein Fluid von einer Eintrittsöffnung 232 zu einer Austrittsöffnung 234, die jeweils in der Deckplatte 601 angeordnet ist, führbar ist. Die Aussparungen werden vorzugsweise durch Stanzen oder Lasern hergestellt.

Um aus den einzelnen Platten einen Kühlkörper 220 mit Fluten zu erhalten, werden die Platten in folgender Reihenfolge zusammengesetzt:

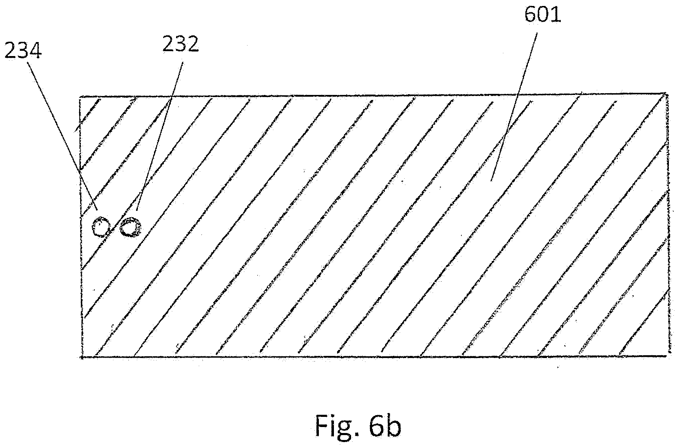

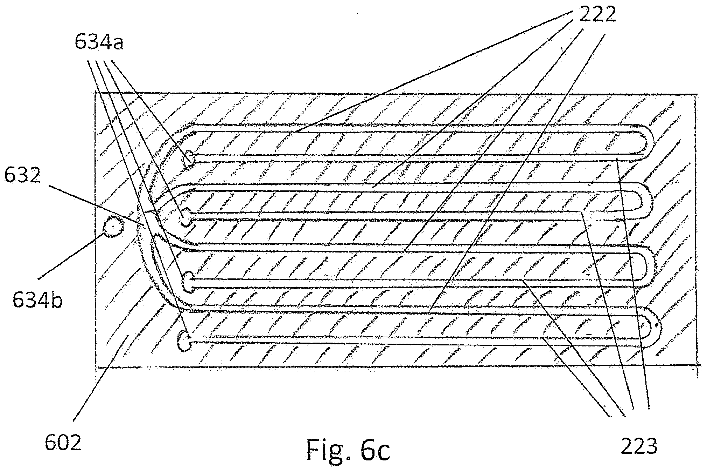

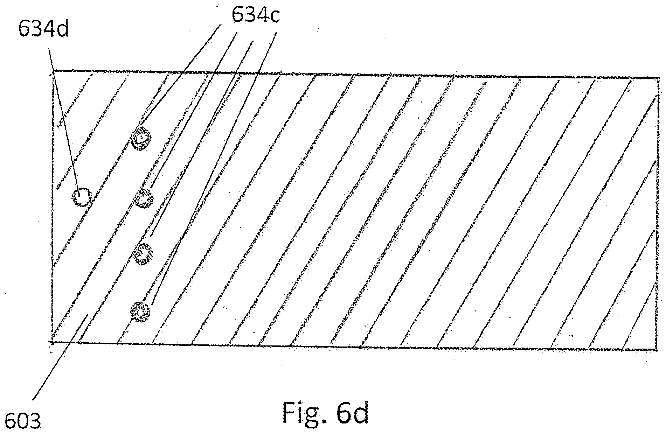

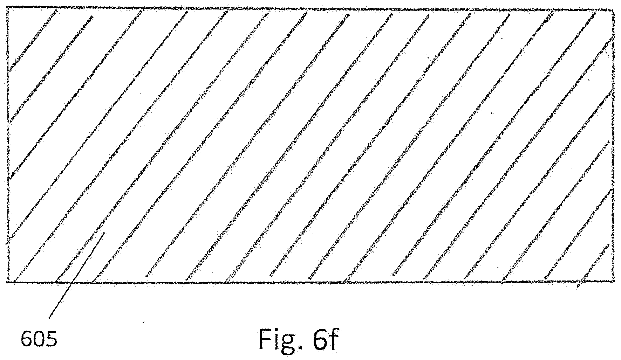

Auf die Deckplatte 601 (Fig. 6b) wird die Kanalplatte 602 (Fig. 6c) gesetzt. Die Kanalplatte weist Aussparungen 222 und 223 auf, die die Vor- und Rückströmungsfluten ähnlich dem Ausführungsbeispiel gemäß Fig. 2 bilden. Die Höhe der Fluten entspricht somit der Dicke der Kanalplatte 602. Zusätzlich weist die Kanalplatte noch Öffnungen 632 und 634a auf, um eine fluidische Verbindung zur Deckplatte 601 beziehungsweise Zwischenplatte 603 herzustellen. Auf die Funktion der Öffnung 634b soll später noch eingegangen werden. Auf die offene Kanalplatte 602 wird nun die Zwischenplatte 603 (Fig. 6d) gestapelt. Durch die Zwischenplatte 603 werden die offenen Fluten in der Kanalplatte abgedeckt. Die Zwischenplatte weist ferner vier Öffnungen 634c und eine Öffnung 634d auf, die eine fluidische Verbindung zur Kanalplatte 602 beziehungsweise Durchlassplatte 604 sicherstellen. In der Durchlassplatte 604 (Fig. 6e) werden die Austritte der Fluten 634a der Kanalplatte durch die Fluten 635 in einem Punkt 636 zusammengefasst. Um die Fluten 635 in der Durchlassplatte 604 zu verschließen, wird auf die Durchlassplatte noch eine weitere Bodenplatte 605 (Fig. 6f) gestapelt. Die Bodenplatte weist vorzugsweise die gleiche Größe wie sämtliche anderen Platten auf, kann jedoch aus Gründen einer Materialersparnis kleiner ausgeführt werden. Zwingend müssen jedoch die Fluten 635 der Durchlassplatte abgedeckt werden.

Ein Fluid strömt daher durch die Eintrittsöffnung 232 der Deckplatte 601 in die Kanalplatte 602. Durch die Fluten 222 und 223 wird das Fluid anschließend zu den Öffnungen 634a geleitet und durch die Öffnungen 634c der Zwischenplatte 603 zur Durchlassplatte 604 geführt. Dort erfährt das Fluid in den Fluten 635 eine Umlenkung zu einem gemeinsamen Austrittspunkt 636. Durch die Öffnungen 634d, 634b und 234 wird das Fluid aus dem Kühlkörper 220 geführt.

Sämtliche Platten bestehen vorzugsweise aus einem gut wärmeleitenden Material, insbesondere Aluminium.

Durch die erfindungsgemäße Lösung werden drei Vorteile vereint. Einerseits können die Platten sehr kostengünstig hergestellt werden. Eine teure Herstellung von Platten mit gefrästen Fluten kann entfallen.

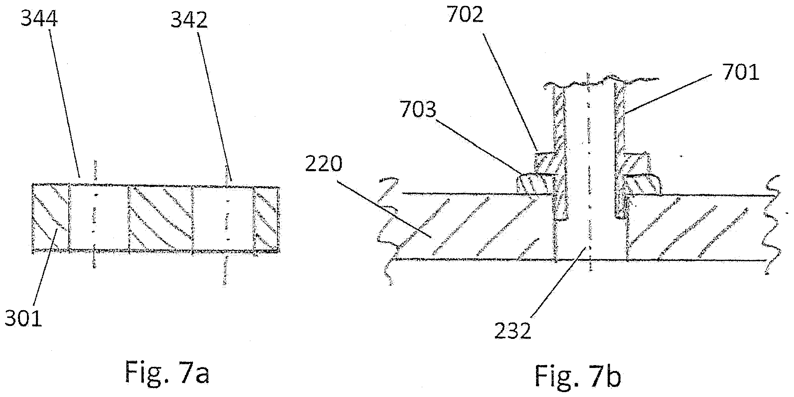

Durch die Gestaltung der Fluten in verschiedenen Ebenen ist es möglich, dass sich die Fluten einerseits überschneiden, andererseits kann durch die Zusammenführung der Fluten zu einem Austrittspunkt und somit zu einer Austrittsöffnung 234, der Anschlussblock 301 sehr einfach gestaltet werden (siehe Fig. 7a).

Da der Eintritt und Austritt in den Kühlkörper in jeweils einem Punkt erfolgt, ist es nicht mehr zwingend notwendig, einen Anschlussblock für die Anschlussrollre auf dem Kühlkörper anzubringen. Die Rohre können auch direkt während des Lötprozesses mit dem Kühlkörper 220 verlötet werden.

Fig. 7b zeigt eine Anschlusssituation für ein Anschlussrohr 701 an einem Kühlkörper 220. Das Rohr weist an einem Ende eine Sicke 702 auf, um eine Positionierung des Rohres sicherzustellen und ein zu weites Eindringen in den Kühlkörper 220 zu verhindern. Um eine Verlegung zwischen Rohr und Kühlkörper zu erreichen, wird zwischen dem Rohr und dem Kühlkörper ein Lotring oder Lotblech 703 eingelegt.

In einem weiteren Ausführungsbeispiel kann die Kanalplatte mehrere Platten mit Stegen in den Kanälen, die zur Stabilität der Konstruktion dienen, umfassen. Die Kanalhöhe entspricht dann der Gesamthöhe der einzelnen Platten.

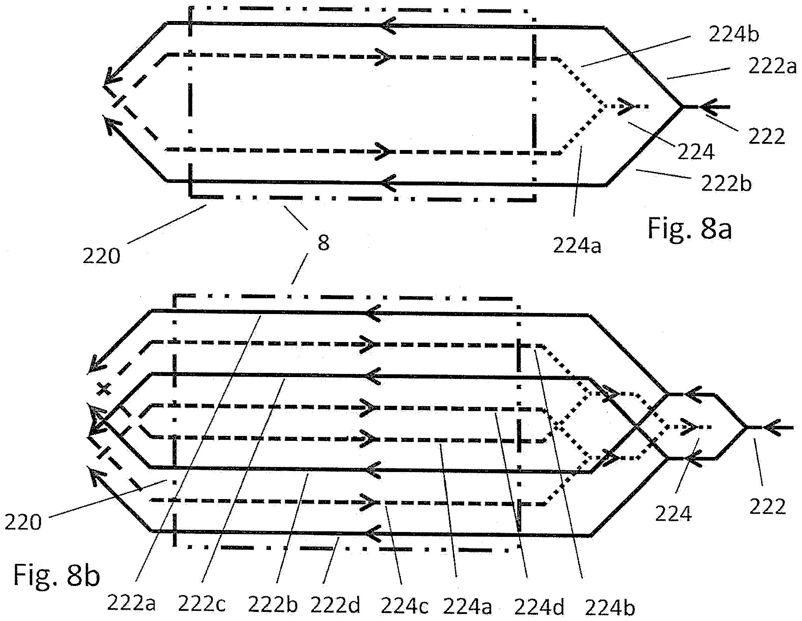

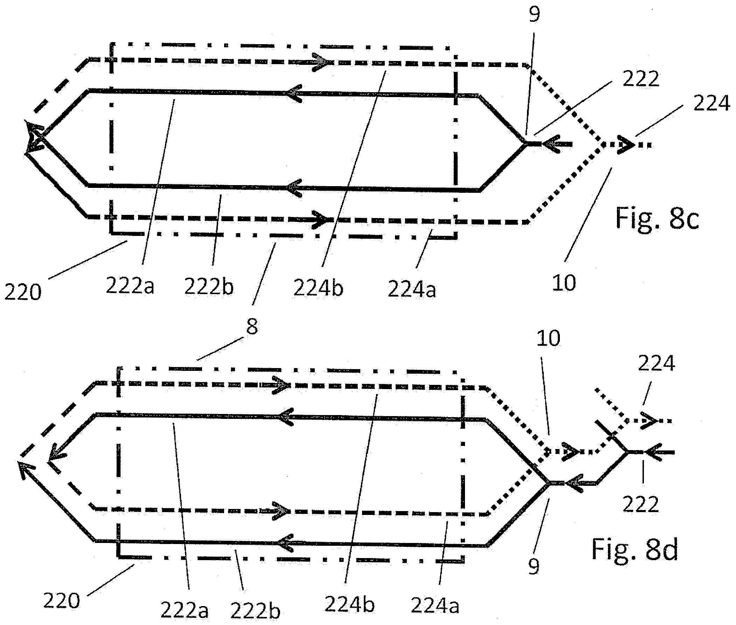

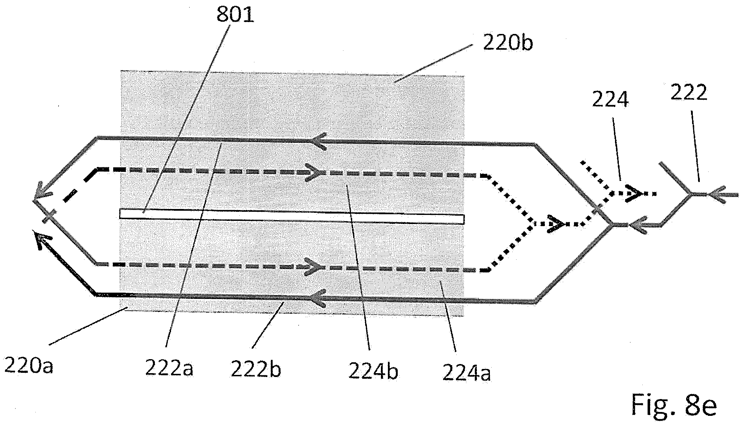

Die Figuren 8a, 8c und 8e zeigen weitere Beispiele einer nicht erfindungsgemäßen Vorrichtung zur Kühlung einer Wärmequelle eines Kraftfahrzeugs. Die Figuren 8b und 8d zeigen weitere Ausführungsbeispiele einer erfindungsgemäßen Vorrichtung zur Kühlung einer Wärmequelle eines Kraftfahrzeugs.

Im Besonderen ist hierbei ein Ausschnitt 8 eines Kühlkörpers 220 dargestellt, in dem eine besonders homogene Kältemittelverteilung und damit einhergehende Temperaturverteilung an der Oberfläche des Kühlkörpers erreicht wird.

Gemäß Fig. 8a wird eine Vorströmungsflut 222 in eine erste Teilflut 222a und eine zweite Teilflut 222b aufgeteilt. Somit wird ein in der Vorströmungsflut fließendes Kältemittel in die beiden Teilfluten gleichmäßig aufgeteilt. Nicht dargestellt sind in Fig. 8a etwaige Ein- und Austrittsöffnungen.

Anschließend werden die beiden Teilfluten im "U-Flow" geführt, so dass eine erste Teilflut 222a der Vorströmungsflut eine korrespondierende erste Teilflut 224a einer Rückströmungsflut und eine zweite Teilflut 222b der Vorströmungsflut eine korrespondierende zweite Teilflut 224b der Rückströmungsflut aufweist. Ein Kältemittel strömt daher ausgehend von einer Vorströmungsflut 222 in eine erste Teilflut 222a und anschließend im Gegenstrom in einer ersten Teilflut 224a der Rückströmungsflut. Bevorzugt sind hierbei die erste Teilflut der Vorströmungsflut und die erste Teilflut der Rückströmungsflut gleich lang ausgebildet.

Ferner ist aus Fig. 8a ersichtlich, dass die erste Teilflut 222a der Vorströmungsflut unmittelbar benachbart zur zweiten Teilflut 224b der Rückströmungsflut und die zweite Teilflut 222b der Vorströmungsflut unmittelbar benachbart zur ersten Teilflut 224a angeordnet ist. Unter "unmittelbar benachbart" wird verstanden, dass sich zwischen diesen beiden Fluten keine weitere Flut befindet, so dass eine entsprechend gute wärmeleitende Verbindung zwischen den beiden Fluten besteht.

Eine derartige Anordnung der Vorströmungsfluten und Rückströmungsfluten in dem Kühlkörper hat prinzipiell zwei entscheidende Vorteile. Erstens wird durch den Ausgleich der Temperaturunterschiede am Eintritt und am Austritt eines Kältemittelstroms eine gleichmäßige Temperaturverteilung im Kühlkörper über die gesamte Länge einer Teilflut erreicht, zweitens gleichen sich inhomogene Kältemittelströme in den einzelnen Teilfluten zwangsläufig aus. Kommt es beispielsweise in der ersten Teilflut der Vorströmungsflut zu einem Anstieg des Druckverlustes und somit zu einem verminderten Kältemittelmassenstrom, so erhöht sich entsprechend der Kältemittelmassenstrom in der zweiten Teilflut der Vorströmungsflut und der korrespondierenden Rückströmungsflut. Da die erste Teilflut der Vorströmungsflut und die zweite Teilflut der Rückströmungsflut unmittelbar nebeneinander liegen, kann durch Wärmeleitung beziehungsweise durch einen direkten Wärmeübertrag der beiden Fluten die Minderleistung der ersten Teilflut durch die Mehrleistung der zweiten Teilflut weitgehend kompensiert werden.

Dieses Prinzip der Flutentrennung und die damit einhergehende Aufteilung der Kältemittelströme sind beliebig erweiterbar. Beispielsweise zeigt Fig. 8b eine Aufteilung der Vorströmungsflut 222 in vier Teilfluten 222a-222d und damit korrespondierende Teilfluten 224a-224d der Rückströmungsflut. Jedoch sind je nach Größe des Kühlkörpers auch weitere Aufteilungen auf 8, 16, 32, 64 oder mehr Fluten nach Art einer Kaskadenschaltung denkbar.

Je nach Anwendungsfall kann, wie in den Fig. 8a bis 8d dargestellt, der Verzweigungspunkt 9 der Vorströmungsflut außerhalb, innerhalb oder neben dem Verzweigungspunkt 10 der Rückströmungsflut angeordnet sein. Alternativ kann in einem weiteren Ausführungsbeispiel gemäß Fig. 8e der Kühlkörper 220 aus einer ersten Kühlkörpereinheit 220a und einer zweiten Kühlkörpereinheit 220b bestehen, wobei die Anzahl der Kühlkörpereinheiten, die den Kühlkörper bilden, auch größer sein kann.

Die Beispiele gemäß den Fig. 8a - 8d sind nicht nur für den Einsatz eines Kältemittels, sondern auch für ein Kühlmittel, beispielsweise ein Gemisch aus Wasser und Glykol, geeignet.

## Patentansprüche

1. Vorrichtung zur Kühlung einer Wärmequelle eines Kraftfahrzeugs, mit folgenden Merkmalen:
einem Kühlkörper (220), der mehrere Vorströmungsfluten (222) und mehrere Rückströmungsfluten (224) aufweist, wobei zumindest eine Mehrzahl der Vorströmungsfluten und Rückströmungsfluten abwechselnd nebeneinanderliegend in dem Kühlkörper angeordnet sind, wobei eine Vorströmungsflut (222) in eine erste Teilflut (222a) und mindestens eine zweite Teilflut (222b) aufgeteilt wird und die erste Teilflut der Vorströmungsflut (222a) unmittelbar benachbart zur der zweiten Teilflut der Vorströmungsflut (222b) korrespondierenden Rückströmungsflut (224b) angeordnet ist und die zweite Teilflut der Vorströmungsflut (222b) unmittelbar benachbart zur der ersten Teilflut der Vorströmungsflut (222a) korrespondierenden Rückströmungsflut (224a) angeordnet ist, **dadurch gekennzeichnet, dass** die zu der ersten Teilflut der Vorströmungsflut (222a) korrespondierende Rückströmungsflut (224a) und die zu der zweiten Teilflut der Vorströmungsflut (222b) korrespondierende Rückströmungsflut (224b) als getrennte Fluten ausgebildet sind.

2. Vorrichtung gemäß Anspruch 1, bei der die Vorströmungsfluten (222) und die Rückströmungsfluten (224) so in dem Kühlkörper (220) angeordnet sind, dass zwischen benachbarten Vorströmungsfluten mindestens eine Rückströmungsflut angeordnet ist.

3. Vorrichtung gemäß einem der vorangegangenen Ansprüche, bei der die Vorströmungsfluten (222) und die Rückströmungsfluten (224) so in dem Kühlkörper (220) angeordnet sind, dass zwischen benachbarten Rückströmungsfluten mindestens eine Vorströmungsflut angeordnet ist.

4. Vorrichtung gemäß einem der vorangegangenen Ansprüche, bei der der Kühlkörper (220) eine Eintrittsöffnung (232) aufweist, die mit den Vorströmungsfluten (222) verbunden ist und eine oder eine Mehrzahl von Austrittsöffnungen (234) aufweist, die jeweils mit einer der Rückströmungsfluten (224) verbunden sind.

5. Vorrichtung gemäß einem der vorangegangenen Ansprüche, bei der der Kühlkörper (220) mehrere geschichtete Platten umfasst, wobei zwischen den Platten Fluten (222, 224) gebildet werden und ein Fluid von einer Eintrittsöffnung (232) durch die Fluten (222, 224) zu einer Austrittsöffnung (234) führbar ist.

6. Vorrichtung gemäß einem der vorangegangenen Ansprüche, bei der der Kühlkörper (220) eine Mehrzahl von Verbindungsstellen (226) aufweist, die ausgebildet sind, um jeweils eine der Vorströmungsfluten (222) mit jeweils einer der Rückströmungsfluten (224) zu verbinden.

7. Vorrichtung gemäß Anspruch 6, bei der die Mehrzahl der Verbindungsstellen (226) in einer ersten Hälfte des Kühlkörpers (220) und die Eintrittsöffnung (232) und die Mehrzahl der Austrittsöffnungen (234) in einer zweiten Hälfte des Kühlkörpers angeordnet sind, wobei die erste und die zweite Hälfte einander gegenüberliegen.

8. Vorrichtung gemäß einem der vorangegangenen Ansprüche, die ausgebildet ist, um das Fluid, insbesondere ein Kältemittel , in zumindest teilweise flüssiger Form aufzunehmen und das Fluid, insbesondere ein Kältemittel , in gasförmiger Form abzugeben.

9. Vorrichtung gemäß einem der Ansprüche 4 bis 8, bei der die Rückströmungsfluten (224) zumindest im Bereich der Austrittsöffnungen (234) jeweils eine Überhitzungszone aufweisen.

10. Vorrichtung gemäß einem der Ansprüche 4 bis 9, mit einem Anschlussblock (301), der eine Zuführöffnung (342) und eine Abführöffnung (344) aufweist und ausgebildet ist, um die Eintrittsöffnung (232) des Kühlkörpers (220) mit der Zuführöffnung und die eine oder Mehrzahl von Austrittsöffnungen (234) des Kühlkörpers mit der Abführöffnung zu verbinden.

11. Kältemittelkreislauf für ein Kraftfahrzeug, mit folgenden Merkmalen:
einer Vorrichtung (102) zur Kühlung gemäß einem der vorangegangenen Ansprüche; und
einem Verdichter (106), der der Vorrichtung zur Kühlung nachgeschaltet ist.

12. Kältemittelkreislauf gemäß Anspruch 11, mit einem geregelten Expansionsventil (112) zur Regelung eines Fluidstroms, insbesondere eines Kältemittelstroms, durch den Kühlkörper (220).

13. Kältemittelkreislauf gemäß Anspruch 12, bei der das geregelte Expansionsventil (112) ausgebildet ist, um den Fluidstrom, insbesondere den Kältemittelstrom, abhängig von einer Temperatur des Kältemittels nach Durchströmen des Kühlkörpers (220) zu regeln.

## Claims

1. A device for cooling a heat source of a motor vehicle, having the following features:
a cooling body (220) which has multiple feed flow passages (222) and multiple return flow passages (224), wherein at least a plurality of the feed flow passages and return flow passages is situated adjacent to each other in an alternating manner within the cooling body, wherein a feed flow passage (222) is divided into a first partial passage (222a) and at least one second partial passage (222b), and the first partial passage of the feed flow passage (222a) is situated directly adjacent to the return flow passage (224b) corresponding to the second partial passage of the feed flow passage (222b) and the second partial passage of the feed flow passage (222b) is situated directly adjacent to the return flow passage (224a) corresponding to the first partial passage of the feed flow passage (222a), **characterised in that** the return flow passage (224a) corresponding to the first partial passage of the feed flow passage (222a) and the return flow passage (224b) corresponding to the second partial passage of the feed flow passage (222b) are formed as separate passages.

2. The device according to claim 1, wherein the feed flow passages (222) and the return flow passages (224) are situated within the cooling body (220) in such a way that at least one return flow passage is situated between adjacent feed flow passages.

3. The device according to one of the preceding claims, wherein the feed flow passages (222) and the return flow passages (224) are situated within the cooling body (220) in such a way that at least one feed flow passage is situated between adjacent return flow passages.

4. The device according to one of the preceding claims, wherein the cooling body (220) has an inlet opening (232) which is connected to the feed flow passages (222) and has one or a plurality of outlet openings (234), each of which is connected to one of the return flow passages (224).

5. The device according to one of the preceding claims, wherein the cooling body (220) comprises multiple layered plates, wherein passages (222, 224) are formed between the plates and a fluid is conductible through the passages (222, 224) from an inlet opening (232) to an outlet opening (234).

6. The device according to one of the preceding claims, wherein the cooling body (220) has a plurality of connecting points (226), each of which is designed to connect one of the feed flow passages (222) to one of the return flow passages (224).

7. The device according to claim 6, wherein the plurality of connecting points (226) are situated in a first half of the cooling body (220) and the inlet opening (232) and the plurality of outlet openings (234) are situated in a second half of the cooling body, wherein the first and second halves are located opposite each other.

8. The device according to one of the preceding claims, which is designed to accept the fluid, in particular a refrigerant, in at least partially liquid form and to discharge the fluid, in particular a refrigerant, in gaseous form.

9. The device according to one of claims 4 to 8, wherein the return flow passages (224) each have an overheating zone at least in the region of the outlet openings (234).

10. The device according to one of claims 4 to 9, having a terminal block (301) which has a supply opening (342) and a discharge opening (344) and is designed to connect the inlet opening (232) of the cooling body (220) to the supply opening as well as to connect the one or a plurality of outlet openings (234) of the cooling body to the discharge opening.

11. A refrigerant circulation system for a vehicle, having the following features:
a cooling device (102) according to one of the preceding claims; and
a compressor (106) which is connected downstream of the cooling device.

12. The refrigerant circulation system according to claim 11, having a regulated expansion valve (112) for regulating a fluid flow, in particular a refrigerant flow, through the cooling body (220).

13. The refrigerant circulation system according to claim 12, wherein the regulated expansion valve (112) is designed to regulate the fluid flow, in particular the refrigerant flow, as a function of a temperature of the refrigerant after flowing through the cooling body (220).

## Revendications

1. Dispositif servant au refroidissement d'une source de chaleur d'un véhicule automobile, ledit dispositif comprenant les caractéristiques suivantes :
un refroidisseur (220) qui présente plusieurs canaux d'écoulement d'alimentation (222) et plusieurs canaux d'écoulement de retour (224), où au moins des canaux d'écoulement d'alimentation et des canaux d'écoulement de retour formant une pluralité de canaux sont disposés dans le refroidisseur en étant placés les uns à côté des autres de façon alternée, où un canal d'écoulement d'alimentation (222) est divisé en un premier canal partiel (222a) et en au moins un deuxième canal partiel (222b), et le premier canal partiel du canal d'écoulement d'alimentation (222a) est disposé en étant directement contigu au canal d'écoulement de retour (224b) correspondant au deuxième canal partiel du canal d'écoulement d'alimentation (222b), et le deuxième canal partiel du canal d'écoulement d'alimentation (222b) est disposé en étant directement contigu au canal d'écoulement de retour (224a) correspondant au premier canal partiel du canal d'écoulement d'alimentation (222a), **caractérisé en ce que** le canal d'écoulement de retour (224a) correspondant au premier canal partiel du canal d'écoulement d'alimentation (222a) et le canal d'écoulement de retour (224b) correspondant au deuxième canal partiel du canal d'écoulement d'alimentation (222b) sont conçus comme des canaux séparés.

2. Dispositif selon la revendication 1, dans lequel les canaux d'écoulement d'alimentation (222) et les canaux d'écoulement de retour (224) sont disposés dans le refroidisseur (220) de manière telle, qu'au moins un canal d'écoulement de retour soit disposé entre des canaux d'écoulement d'alimentation contigus.

3. Dispositif selon l'une des revendications précédentes, dans lequel les canaux d'écoulement d'alimentation (222) et les canaux d'écoulement de retour (224) sont disposés dans le refroidisseur (220) de manière telle, qu'au moins un canal d'écoulement d'alimentation soit disposé entre des canaux d'écoulement de retour contigus.

4. Dispositif selon l'une quelconque des revendications précédentes, dans lequel le refroidisseur (220) présente une ouverture d'entrée (232) qui est reliée aux canaux d'écoulement d'alimentation (222), et qui présente une ouverture de sortie ou une pluralité d'ouvertures de sortie (234) qui sont reliées à chaque fois à l'un des canaux d'écoulement de retour (224).

5. Dispositif selon l'une quelconque des revendications précédentes, dans lequel le refroidisseur (220) comprend plusieurs plaques disposées en couches, où des canaux (222, 224) sont formés entre les plaques, et un fluide peut être acheminé par les canaux (222, 224), depuis une ouverture d'entrée (232) jusqu'à une ouverture de sortie (234).

6. Dispositif selon l'une quelconque des revendications précédentes, dans lequel le refroidisseur (220) présente une pluralité de points de communication (226) qui sont conçus pour relier à chaque fois l'un des canaux d'écoulement d'alimentation (222) à chaque fois à l'un des canaux d'écoulement de retour (224).

7. Dispositif selon la revendication 6, dans lequel la pluralité des points de communication (226) sont disposés dans une première moitié du refroidisseur (220), l'ouverture d'entrée (232) et la pluralité des ouvertures de sortie (234) étant disposées dans une seconde moitié du refroidisseur, où la première et la seconde moitié se font face l'une l'autre.

8. Dispositif selon l'une quelconque des revendications précédentes, qui est conçu pour recevoir le fluide, en particulier un fluide frigorigène, se présentant au moins partiellement sous forme liquide, et pour fournir le fluide, en particulier un fluide frigorigène, se présentant sous forme gazeuse.

9. Dispositif selon l'une quelconque des revendications 4 à 8, dans lequel les canaux d'écoulement de retour (224) présentent à chaque fois une zone de surchauffe, au moins dans la zone des ouvertures de sortie (234).

10. Dispositif selon l'une quelconque des revendications 4 à 9, comprenant un bloc de raccordement (301) qui présente une ouverture d'alimentation (342) et une ouverture d'évacuation (344) et qui est conçu pour relier l'ouverture d'entrée (232) du refroidisseur (220), à l'ouverture d'alimentation, et pour relier l'une des ouvertures de sortie ou la pluralité des ouvertures de sortie (234) du refroidisseur, à l'ouverture d'évacuation.

11. Circuit de fluide frigorigène pour un véhicule automobile, comprenant les caractéristiques suivantes :
un dispositif (102) servant au refroidissement selon l'une quelconque des revendications précédentes ; et
un compresseur (106) qui est monté en aval du dispositif servant au refroidissement.

12. Circuit de fluide frigorigène selon la revendication 11, comprenant un détendeur réglé (112) servant à la régulation d'un flux de fluide, en particulier d'un flux de fluide frigorigène circulant à travers le refroidisseur (220).

13. Circuit de fluide frigorigène selon la revendication 12, dans lequel le détendeur réglé (112) est conçu pour réguler le flux de fluide, en particulier le flux de fluide frigorigène, en fonction d'une température du fluide frigorigène après circulation à travers le refroidisseur (220).
